Europäisches Patentamt

European Patent Office

Office européen des brevets

(19)

(11) **EP 0 720 637 B1**

(12) **EUROPÄISCHE PATENTSCHRIFT**

(45) Veröffentlichungstag und Bekanntmachung des Hinweises auf die Patenterteilung:
  **25.11.1998 Patentblatt 1998/48**

(21) Anmeldenummer: **94926917.9**

(22) Anmeldetag: **02.09.1994**

(51) Int Cl.$^6$: **C08F 283/01**, C09D 151/08

(86) Internationale Anmeldenummer:
  **PCT/EP94/02928**

(87) Internationale Veröffentlichungsnummer:
  **WO 95/08599 (30.03.1995 Gazette 1995/14)**

(54) **VERFAHREN ZUR HERSTELLUNG VON DECKLACKSCHICHTEN UND WÄSSRIGE LACKE**

PROCESS FOR PRODUCING COATING LACQUER LAYERS AND AQUEOUS LACQUERS

PROCEDE DE PRODUCTION DE COUCHES DE VERNIS DE FINITION ET VERNIS AQUEUX

(84) Benannte Vertragsstaaten:
  **DE ES FR GB IT SE**

(30) Priorität: **21.09.1993 DE 4332015**

(43) Veröffentlichungstag der Anmeldung:
  **10.07.1996 Patentblatt 1996/28**

(73) Patentinhaber: **BASF Coatings Aktiengesellschaft**
  **48165 Münster (DE)**

(72) Erfinder:
  • **HARTUNG, Michael**
    **D-59590 Geseke (DE)**
  • **BERNHOFER, Thomas**
    **D-59609 Anröchte (DE)**
  • **GRUMPE, Heinz-Ulrich**
    **D-48163 Münster (DE)**
  • **MOORKAMP, Ludwig**
    **D-48165 Münster (DE)**

(56) Entgegenhaltungen:
  **EP-A- 0 353 797        EP-A- 0 424 705**
  **EP-A- 0 527 410        WO-A-91/15528**

**Beschreibung**

Die Erfindung betrifft ein Verfahren zur Herstellung von Decklackschichten, bei dem ein wäßriger Lack auf ein Substrat aufgebracht und die erhaltene Lackschicht getrocknet wird.

Die Decklackschicht stellt die oberste Lackschicht einer - insbesondere bei Fahrzeuglackierungen in der Regel mehrschichtigen - Lackierung dar. Sie bestimmt über Jahre hinweg das optische Erscheinungsbild des lackierten Substrates und ist enormen Belastungen ausgesetzt. Ggf. im Zusammenwirken mit den anderen Lackschichten trägt die Decklackschicht dazu bei, die geforderten mechanischen Eigenschaften und den Korrosionsschutz der Lackierung zu gewährleisten. Die Decklackschicht muß beispielsweise auf dem Untergrund gut haften, elastisch, glänzend und beständig gegen mechanische Beschädigungen, insbesondere gegen Steinschlag, Wettereinflüsse, insbesondere Feuchtigkeit, und Chemikalien sein.

Um alle diese Forderungen zu erfüllen, wurden in der Vergangenheit zur Herstellung von Decklackschichten Lacke auf Basis organischer Lösemittel eingesetzt, die Bindemittelsysteme enthielten, welche bei hohen Einbrenntemperaturen widerstandsfähige, vernetzte Korrosionsschutzgrundierungs- bzw. Füllerschichten liefern. In neuerer Zeit werden auch wäßrige Lacke eingesetzt, die bei hohen Einbrenntemperaturen eingebrannt werden.

Um Energie einzusparen und aufgrund verschiedener anderer Umstände ist es in vielen Fällen erforderlich, bei der Herstellung von Decklackschichten, die nach Aufbringung des Lackes auf das Substrat erhaltene Lackschicht bei tieferen Temperaturen, insbesondere bei einer Temperatur, die unter 110°C, vorzugsweise zwischen 60 und 90°C liegt, zu trocknen.

Überraschenderweise wurde gefunden, daß bei einem Verfahren zur Herstellung von Decklackschichten, bei dem ein wäßriger Lack auf das Substrat aufgebracht und die erhaltene Lackschicht getrocknet wird, Decklackschichten mit besonders gutem Eigensschaftsprofil erhalten werden, wenn der zur Herstellung der Decklackschicht verwendete wäßrige Lack als Bindemittel eine Kombination aus den Komponenten (I) und (II) enthält, wobei die Komponenten (I) und (II) in einem Gewichtsverhältnis, bezogen auf Feststoff, von 1,0 : 0,5 bis 1,0 : 5,0 vorliegen und die Komponente (I) eine wäßrige Dispersion eines Polymeren ist, die erhältlich ist, indem in einem organischen Lösemittel oder in einem Gemisch organischer Lösemittel

(A) ethylenisch ungesättigte Monomere oder ein Gemisch ethylenisch ungesättigter Monomere in Gegenwart

(B) eines Polyurethanharzes, das ein zahlenmittleres Molekulargewicht von 200 bis 30.000 aufweist und das im statistischen Mittel pro Molekül 0,05 bis 1,1 polymerisierbare Doppelbindungen enthält, polymerisiert werden und das so erhaltene Reaktionsprodukt in eine wäßrige Dispersion überführt wird und die Komponente (II) eine wäßrige Lösung oder Dispersion eines in Wasser löslichen oder dispergierbaren Polyacrylatharzes oder eines in Wasser löslichen oder dispergierbaren Polyurethan- oder Polyesterharzes oder eine Mischung aus solchen wäßrigen Lösungen oder Dispersionen ist, wobei das Polyacrylatharz oder Polyurethanharz oder Polyesterharz oder die Mischung aus solchen Harzen eine Glasübergangstemperatur $T_G$ von +15 bis +85°C aufweist.

Die nach dem erfindungsgemäßen Verfahren hergestellten Decklackschichten zeichnen sich - auch bei Anwendung von Trocknungstemperaturen, die unter 90°C liegen - durch hohen Glanz, hohe Beständigkeiten gegenüber mechanischen Belastungen, Feuchtigkeit und Chemikalien, hohe Elastizität und Beständigkeit gegen Steinschlag sowie durch eine gute Haftung zu unterschiedlichsten Substraten aus. Die erfindungsgemäß eingesetzten wäßrigen Lacke zeichnen sich weiter dadurch aus, daß sie unter Verwendung eines sehr geringen Lösemittelanteils formuliert werden können, sehr gut verarbeitbar sind und Lackschichten liefern, die schon kurze Zeit nach der Applikation die oben beschriebenen vorteilhaften Eigenschaften zeigen.

In EP-A-0 353 797 wird die Herstellung funktioneller Polyurethane beschrieben, die zur Herstellung wäßriger Dispersionen verwendet werden können. Solche Dispersionen können für sich allein oder in Verbindung mit wasserverdünnbaren Polyestern oder Polyurethanen eingesetzt werden. Ein Hinweis auf die oben genannte Aufgabenstellung und deren erfindungsgemäße Lösung kann der EP-A-0 353 797 nicht entnommen werden.

In der DE-A-40 10 176 (entsprechend WO-A-91/15528) werden wäßrige Lacke beschrieben, die als Bindemittel wäßrige Dispersionen enthalten, die denen der erfindungsgemäß eingesetzten Komponente (I) ähnlich sind. Versuche, aus den in den Beispielen der DE-A-40 10 176 beschriebenen Dispersionen wäßrige Lacke herzustellen und mit diesen Lacken Decklackschichten herzustellen, führten zu Decklackschichten, die nach Durchführung eines Salzsprühtests nach DIN 50021 sowie nach Durchführung eines Konstantklimatests über 120 Stunden nach DIN 50017 Blasen bildeten und starke Enthaftungserscheinungen zeigten.

Die Komponenten (I) und (II) sind in den erfindungsgemäß eingesetzten Lacken in einem Gewichtsverhältnis, bezogen auf Feststoff, von 1,0 : 0,5, bis 1,0 : 5,0, vorzugsweise von 1,0 : 1,5 bis 1,0 : 2,5, besonders bevorzugt von 1,0 : 1,75 bis 1,0 : 2,25 enthalten.

Die in den erfindungsgemäß eingesetzten Lacken enthaltene Komponente (I) ist eine wäßrige Dispersion eines Polymeren, die erhältlich ist, indem in einem organischen Lösemittel oder in einem Gemisch organischer Lösemittel

(A) ethylenisch ungesättigte Monomere oder ein Gemisch ethylenisch ungesättigter Monomere in Gegenwart

(B) eines Polyurethanharzes, das ein zahlenmittleres Molekulargewicht von 200 bis 30000, vorzugsweise 1000 bis 5000 aufweist und das im statistischen Mittel pro Molekül 0,05 bis 1,1, vorzugsweise 0,2 bis 0,9, besonders bevorzugt 0,3 bis 0,7 polymerisierbare Doppelbindungen enthält,

polymerisiert werden und das so erhaltene Reaktionsprodukt in eine wäßrige Dispersion überführt wird.

Zur Herstellung der erfindungsgemäß eingesetzten Komponente (I) wird in einem ersten Schritt nach gut bekannten Methoden der Polyurethanchemie ein Polyurethanharz (B) hergestellt, das erhältlich ist, indem

(b1 ein gegebenenfalls polymerisierbare Doppelbindungen aufweisendes Polyester- und/oder Polyetherpolyol mit einem zahlenmittleren Molekulargewicht von 400 bis 5000 oder ein Gemisch aus solchen Polyester- und/oder Polyetherpolyolen

(b2) ein Polyisocyananat oder ein Gemisch aus Polyisocyanaten

(b3) gegebenenfalls eine Verbindung, die neben einer polymerisierbaren Doppelbindung mindestens noch eine gegenüber NCO-Gruppen reaktive Gruppe enthält oder ein Gemisch aus solchen Verbindungen

(b4) gegebenenfalls eine Verbindung, die mindestens eine gegenüber Isocyanatgruppen reaktive und mindestens eine zur Anionenbildung befähigte Gruppe im Molekül aufweist oder ein Gemisch aus solchen Verbindungen

(b5) gegebenenfalls eine Verbindung, die mindestens eine gegenüber NCO-Gruppen reaktive Gruppe und mindestens eine Poly(oxyalkylen)gruppe im Molekül aufweist, oder ein Gemisch aus solchen Verbindungen und gegebenenfalls

(b6) eine Hydroxyl- und/oder Aminogruppen enthaltende organische Verbindung mit einem Molekulargewicht von 60 bis 600, oder ein Gemisch aus solchen Verbindungen

zu einem Polyurethanharz umgesetzt werden, das ein zahlenmittleres Molekulargewicht von 200 bis 30000, vorzugsweise 1000 bis 5000, aufweist und das im statistischen Mittel pro Molekül 0,05 bis 1,1, vorzugsweise 0,2 bis 0,9, besonders bevorzugt 0,3 bis 0,7 polymerisierbare Doppelbindungen enthält.

Das Polyurethanharz (B) weist vorzugsweise eine Säurezahl von 0 bis 2,0 auf. Die Säurezahl des Polyurethanharzes kann durch Verwendung entsprechender Mengen an säuregruppenhaltigen Bausteinen leicht gesteuert werden.

Das Molekulargewicht der Polyurethanharze kann - wie dem Fachmann bekannt - insbesondere durch das Mengenverhältnis und die Funktionalität der eingesetzten Ausgangsverbindungen (b1) bis (b6) gesteuert werden.

Die Polyurethanharze können sowohl in Substanz als auch in organischen Lösemitteln hergestellt werden.

Die Polyurethanharze können durch gleichzeitige Umsetzung aller Ausgangsverbindungen hergestellt werden. In vielen Fällen ist es jedoch zweckmäßig, die Polyurethanharze stufenweise herzustellen. So ist es zum Beispiel möglich, aus den Komponenten (b1) und (b2) ein isocyanatgruppenhaltiges Präpolymer herzustellen, das dann mit der Komponente (b3) weiter umgesetzt wird. Weiter ist es möglich, aus den Komponenten (b1) (b2), (b3) und gegebenenfalls (b4) und (b5) ein isocyanatgruppenhaltiges Präpolymer herzustellen, das dann mit der Komponente (b6) zu höhermolekularen Polyurethanen umgesetzt werden kann. In den Fällen, in denen als Komponente (b3) eine Verbindung eingesetzt wird, die nur eine gegenüber Isocyanatgruppen reaktive Gruppe enthält, kann in einer ersten Stufe aus (b2) und (b3) ein isocyanatgruppenhaltiges Vorprodukt hergestellt werden, das anschließend mit den weiteren Komponenten weiter umgesetzt werden kann.

Die Umsetzung der Komponenten (b1) bis (b6) wird zweckmäßigerweise in Gegenwart von Katalysatoren, wie z. B. Dibutylzinndilaurat, Dibutylzinnmaleat, tertiäre Amine usw. durchgeführt.

Die einzusetzenden Mengen an Komponente (b1) (b2), (b3), (b4), (b5) und (b6) ergeben sich aus dem anzustrebenden zahlenmittleren Molekulargewicht und der anzustrebenden Säurezahl. Die polymerisierbaren Doppelbindungen können durch Einsatz von polymerisierbare Doppelbindungen aufweisende (b1)-Komponenten und/oder die Komponente (b3) in die Polyurehtanmoleküle eingeführt werden. Es ist bevorzugt, die polymerisierbaren Doppelbindungen über die Komponente (b3) einzuführen.

Als Komponente (b1) können gesättigte und ungesättigte Polyester- und/oder Polyetherpolyole, insbesondere Polyester- und/oder Polyetherdiole, mit einem zahlenmittleren Molekulargewicht von 400 bis 5000 eingesetzt werden.

Geeignete Polyetherdiole sind z.B. Polyetherdiole der allgemeinen Formel $H(-O-(CHR^1)_n-)_mOH$, wobei $R^1$ = Wasserstoff oder ein niedriger, gegebenenfalls substituierter Alkylrest ist, n = 2 bis 6, bevorzugt 3 bis 4 und m = 2 bis 100, bevorzugt 5 bis 50 ist. Als Beispiele werden lineare oder verzweigte Polyetherdiole wie Poly(oxyethylen)glykole, Poly(oxypropylen)glykole und Poly(oxybutylen)glykole genannt. Die ausgewählten Polyetherdiole sollen keine übermäßigen Mengen an Ethergruppen einbringen, weil sonst die gebildeten Polymere in Wasser anquellen. Die bevorzugten Polyetherdiole sind Poly(oxypropylen)glykole, die ein zahlenmittleres Molekulargewicht von 400 bis 3000 aufweisen. Als Polyetherdiol kann auch ethoxyliertes Bisphenol-A eingesetzt werden.

Polyesterdiole werden durch Veresterung von organischen Dicarbonsäuren oder ihre Anhydriden mit organischen Diolen hergestellt oder leiten sich von einer Hydroxycarbonsäure oder einem Lacton ab. Um verzweigte Polyesterpolyole herzustellen, können in geringem Umfang Polyole oder Polycarbonsäure mit einer höheren Wertigkeit eingesetzt werden. Die Dicarbosäuren und Diole können lineare oder verzweigte aliphatische, cycloaliphatische oder aromatische Dicarbonsäuren oder Diole sein. Die zur Herstellung der Polyester verwendeten Diole bestehen beispielsweise aus Alkylenglykolen, wie Ethylenglykol, Propylenglykol, Butylenglykol, Butandiol-1,4, Hexandiol-1,6, Neopentylglykol und anderen Diolen, wie Dimethylolcyclohexan. Es können jedoch auch kleine Mengen an Polyolen mit mehr als zwei Hydroxylgruppen im Molekül, wie Trimethylolpropan, Glycerin, Pentaerythrit, zugesetzt werden. Die Säurekomponente des Polyesters besteht in erster Linie aus niedermolekularen Dicarbonsäuren oder ihren Anhydriden mit 2 bis 44, bevorzugt 4 bis 36 Kohlenstoffatomen im Molekül. Geeignete Säuren sind beispielsweise o-Phthalsäure, Isophthalsäure, Terephthalsäure, Tetrahydrophthalsäure, Cyclohexandicarbonsäure, Bernsteinsäure, Adipinsäure, Azelainsäure, Sebazinsäure, Maleinsäure, Fumarsäure, Glutarsäure, Hexachlorheptandicarbonsäure, Tetrachlorphthalsäure und/oder dimerisierte Fettsäuren. Anstelle dieser Säuren können auch ihre Anhydride, soweit diese existieren, verwendet werden. Bei der Bildung von Polyesterpolyolen können auch kleinere Mengen an Carbonsäuren mit 3 oder mehr Carboxylgruppen beispielsweise Trimellithsäureanhydrid oder das Addukt von Maleinsäureanhydrid an ungesättigte Fettsäuren anwesend sein.

Es können auch Polyesterdiole eingesetzt werden, die durch Umsetzung eines Lactons mit einem Diol erhalten werden. Sie zeichnen sich durch die Gegenwart von endständigen Hydroxylgruppen und wiederkehrenden Polyesteranteilen der Formel $(-CO-(CHR^2)_n-CH_2-O)$ aus. Hierbei ist n bevorzugt 4 bis 6 und der Substituent $R^2$ = Wasserstoff, ein Alkyl-, Cycloalkyl- oder Alkoxy-Rest. Kein Substituent enthält mehr als 12 Kohlenstoffatome. Die gesamte Anzahl der Kohlenstoffatome im Substituenten übersteigt 12 pro Lactonring nicht. Beispiele hierfür sind Hydroxycapronsäure, Hydroxybuttersäure, Hydrocydecansäure und/oder Hydroxystearinsäure. Für die Herstellung der Polyesterdiole wird das unsubstituierte ε-caprolacton, bei dem n den Wert 4 hat und alle $R^2$-Substituenten Wasserstoff sind, bevorzugt. Die Umsetzung mit Lacton wird durch niedermolekulare Polyole wie Ethylenglykol, 1,3-Propandiol, 1,4-Butandiol, Dimethylolcyclohexan gestartet. Es können jedoch auch andere Reaktionskomponenten, wie Ethylendiamin, Alkyldialkanolamine oder auch Harnstoff mit Caprolacton umgesetzt werden.

Wenn über die Komponente (b1) polymerisierbare Doppelbindungen in die Polyurethanmoleküle eingeführt werden sollen, dann müssen (b1) Komponenten eingesetzt werden, die polymerisierbare Doppelbindungen enthalten. Als Beispiele für solche (b1) Komponenten werden Polyesterpolyole, vorzugsweise Polyesterdiole genannt, die unter Verwendung von polymerisierbare Doppelbindungen enthaltenden Polyolen und/oder Polycarbonsäuren hergestellte worden sind. Als Beispiele für polymerisierbare Doppelbindungen enthaltende Polyole werden genannt: Trimethylolpropanmonoallylether, Glycerinmonoallylether, Pentaerythritmono- und Pentaerythritdiallylether. Als Beispiele für polymerisierbare Doppelbindungen enthaltende Polycarbonsäuren werden Alkendicarbonsäuren, Maleinsäure und ungesättigte dimerisierte Fettsäuren genannt.

Besonders bevorzugte Polyurethanharze (B) werden erhalten, wenn als Komponente (b1) Polyesterpolyole eingesetzt werden, die unter Verwendung einer polymerisierbaren Fettsäure, insbesondere einer dimerisierten Fettsäure mit 10 bis 44 C-Atomen, vorzugsweise mit 32 bis 36 C-Atomen im Molekül oder einer Mischung aus solchen polymerisierten Fettsäuren hergestellt worden sind. Derartige polymerisierte, insbesondere trimerisierte Fettsäuren sind bekannt und im Handel erhältlich (z.B. Empol® 1010, Hersteller: Emery Chemical Co. und Pripol® 1009, Hersteller: Unichema).

Wenn der Gehalt an über die Komponente (b1) in die Komponente (I) eingeführter polymerisierter Fettsäure 5 bis 30, vorzugsweise 10 bis 20 Gew.-% (bezogen auf Feststoff) beträgt, werden Korrosionsschutzgrundierungs- und/oder Füllerschichten mit besonders guten Eigenschaften erhalten.

Als Komponente (b2) können aliphatische und/oder cycloaliphatische und/oder aromatische Polyisocyanate eingesetzt werden. Als Beispiele für aromatische Polyisocyanate werden Phenylendiisocyanat, Toluylendiisocyanat, Xylylendiisocyanat, Biphenylendiisocyanat, Naphtylendiisocyanat und Diphenylmethandiisocyanat genannt.

Aufgrund ihrer guten Beständigkeit gegenüber ultraviolettem Licht ergeben (cyclo)aliphatische Polyisocyanate Produkte mit geringer Vergilbungsneigung. Beispiele für cycloaliphatische Polyisocyanate sind Isophorondiisocyanat, Cyclopentylendiisocyanat sowie die Hydrierungsprodukte der aromatischen Diisocyanate, wie Cyclohexylendiisocyanat, Methylcyclohexylendiisocyanat und Dicyclohexylmethandiisocyanat. Aliphatische Diisocyanate sind Verbindungen der Formel

$$OCN\text{-}(CR^3{}_2)_r\text{-}NCO$$

worin r eine ganze Zahl von 2 bis 20, insbesondere 6 bis 8 ist und $R^3$, das gleich oder verschiedenen sein kann, Wasserstoff oder einen niedrigen Alkylrest mit 1 bis 8 C-Atomen, vorzugsweise 1 oder 2 C-Atomen darstellt. Beispiele hierfür sind Trimethylendiisocyanat, Tetramethylendiisocyanat, Pentamethylendiisocyanat, Hexamethylendiisocyanat, Propylendiisocyanat, Ethylethylendiisocyanat, Dimethylethyldiisocyanat, Methyltrimethylendiisocyanat und Trimethylhexandiisocyanat. Als weiteres Beispiel für ein aliphatisches Diisocyanat wird Tetramethylxyloldiisocyanat genannt. Besonders bevorzugt werden als Diisocyanate Isophorondiisocyanat und Dicyclohexylmethandiisocyanat eingesetzt.

Die Komponente (b2) muß hinsichtlich der Funktionalität der Polyisocyanate so zusammengesetzt sein, daß kein vernetztes Polyurethanharz erhalten wird. Die Komponente (b2) kann neben Diisocyanaten auch einen Anteil an Polyisocyanaten mit Funktionalitäten über zwei - wie z.B. Triisocyanate enthalten.

Als Triisocyanate haben sich Produkte bewährt, die durch Trimerisation oder Oligomerisation von Diisocyanaten oder durch Reaktion von Diisocyanaten mit polyfunktionellen, OH- oder NH-Gruppen enthaltenden Verbindungen entstehen. Hierzu gehören beispielsweise das Isocyanurat des Hexamethylendiisocyanats oder das Addukt von Isophorondiisocyanat an Trimethylolpropan. Die mittlere Funktionalität kann gegebenenfalls durch Zusatz von Monoisocyanaten gesenkt werden. Beispiele für solche kettenabbrechenden Monoisocyanate sind Phenylisocyanat, Cyclohexylisocyanat und Stearylisocyanat.

Die Komponente (b3) dient zur Einführung von polymerisierbaren Doppelbindungen in die Polyurethanharzmoleküle. Es ist bevorzugt, als Komponente (b3) eine Verbindung einzusetzen, die mindestens zwei gegenüber NCO-Gruppen reaktive Gruppen und eine polymerisierbare Doppelbindung enthält. Besonders bevorzugt werden als Komponente (b3) Verbindungen eingesetzt, die neben einer polymerisierbaren Doppelbindung noch zwei gegenüber NCO-Gruppen reaktive Gruppen enthalten. Als Beispiele für gegenüber NCO-Gruppen reaktive Gruppen werden -OH, -SH, > NH und -NH$_2$-Gruppen genannt, wobei -OH, > NH und -NH$_2$-Gruppen bevorzugt sind. Als Beispiele für Verbindungen, die als Komponente (b3) eingesetzt werden können, werden genannt: Hydroxy(meth)acrylate, insbesondere Hydroxyalkyl(meth)acrylate wie Hydroxyethyl-, Hydroxypropyl-, Hydroxybutyl- oder Hydroxyhexyl(meth)acrylat und 2,3-Dihydroxypropyl(meth)-acrylat, 2,3-Dihydroxypropylmonoallylether, 2,3-Dihydroxypropansäureallylester, Glycerinmono(meth)acrylat, Glycerinmonoallylether, Pentaerythritmono(meth)acrylat, Pentaerythritdi(meth)acrylat, Pentaerythritmonoallylether, Pentaerythritdiallylether, Trimethylolpropanmonoallylether, Trimethylolpropanmono(meth)acrylat und Trimethylolpropandiallylether. Als Komponente (b3) wird vorzugsweise Trimethylolpropanmonoallylether, Glycerinmono(meth)acrylat, Pentaerythritdi(meth)acrylat, Pentaerythritdiallylether, Glycerinmonoallylether und Trimethylolpropanmono(meth)acrylat eingesetzt. Als Komponente (b3) werden besonders bevorzugt Trimethylolpropanmonoallylether, Glycerinmonoallylether und 2,3-Dihydroxypropansäureallylester eingesetzt. Es ist bevorzugt, die (b3) Komponenten, die mindestens zwei gegenüber NCO-Gruppen reaktive Gruppen enthalten, kettenständig (nicht endständig) in die Polyurethanmoleküle einzubauen.

Die Einführung von zur Anionenbildung befähigten Gruppen in die Polyurethanmoleküle erfolgt über den Einbau von Verbindungen (b4) in die Polyurethanmoleküle, die mindestens eine gegenüber Isocyanatgruppen reaktive und eine zur Anionenbildung befähigte Gruppe im Molekül enthalten.

Die Menge an einzusetzender Komponente (b4) kann aus der angestrebten Säurezahl berechnet werden.

Als Komponente (b4) werden vorzugsweise Verbindungen eingesetzt, die zwei gegenüber Isocyanatgruppen reaktive Gruppen im Molekül enthalten. Geeignete gegenüber Isocyanatgruppen reaktive Gruppen sind insbesondere Hydroxylgruppen sowie primäre und/oder sekundäre Aminogruppen. Geeignete zur Anionenbildung befähigte Gruppen sind Carboxyl-, Sulfonsäure- und/oder Phosphonsäuregruppen, wobei Carboxylgruppen bevorzugt sind. Als Komponente (b4) können beispielsweise Alkansäuren mit zwei Substituenten am α-ständigem Kohlenstoffatom eingesetzt werden. Der Substituent kann eine Hydroxylgruppen, eine Alkylgruppe oder bevorzugt eine Alkylolgruppe sein. Diese Alkansäuren haben mindestens eine, im allgemeinen 1 bis 3 Carboxylgruppen im Molekül. Sie haben zwei bis etwa 25, vorzugsweise 3 bis 10 Kohlenstoffatome. Beispiele für die Komponente (b4) sind Dihydroxypropionsäure, Dihydroxybernsteinsäure und Dihydroxybenzoesäure. Eine besonders bevorzugte Gruppe von Alkansäuren sind die α,α-Dimethylolalkansäuren der allgemeinen Formel

$$R^4\text{-}C(CH_2OH)_2COOH,$$

wobei

$R^4$ für ein Wasserstoffatom oder eine Alkylgruppe mit bis zu etwa 20 Kohlenstoffatomen steht. Beispiele für solche Verbindungen sind 2,2-Dimethylolessigsäure, 2,2-Dimethylolpropionsäure, 2,2-Dimethylolbuttersäure und 2,2-Dimethylolpentansäure. Die bevorzugte Dihydroxyalkansäure ist 2,2-Dimethylolpropionsäure. Aminogruppenhaltige Verbindungen sind beispielsweise α,δ-Diaminovaleriansäure, 3,4-Diaminobenzoesäure, 2,4-Diaminotoluolsulfonsäure und 2,4-Diaminodiphenylethersulfonsäure.

Mit Hilfe der Komponente (b5) können Poly(oxyalkylen)-gruppen als nichtionische stabilisierende Gruppen in die Polyurethanmoleküle eingeführt werden. Als Komponente (b5) können beispielsweise eingesetzt werden Alkoxypoly (oxyalkylen)alkohole mit der allgemeinen Formel $R'O-(-CH_2-CHR''-O-)_n H$ in der R' für einen Alkylrest mit 1 bis 6 Kohlenstoffatomen, R'' für ein Wasserstoffatom oder einen Alkylrest mit 1 bis 6 Kohlenstoffatomen und n für eine Zahl zwischen 20 und 75 steht.

Der Einsatz der Komponente (b6) führt zur Molekulargewichtserhöhung der Polyurethanharze. Als Komponente (b6) können beispielsweise Polyole mit bis zu 36 Kohlenstoffatomen je Molekül wie Ethylenglykol, Diethylenglykol, Triethylenglykol, 1,2-Propandiol, 1,3-Propandiol, 1,4-Butandiol, 1,2-Butylenglykol, 1,6-Hexandiol, Trimethylolpropan, Ricinusöl oder hydriertes Ricinusöl, Pentaerythrit, 1,2-Cyclohexandiol, 1,4-Cyclohexandimethanol, Bisphenol A, Bisphenol F, Neopentylglykol, Hydroxypivalinsäureneopentylglykolester, hydroxyethyliertes oder hydroxypropyliertes Bisphenol A, hydriertes Bisphenol A und deren Mischungen eingesetzt werden. Die Polyole werden im allgemeinen in Mengen von bis zu 30 Gewichtsprozent, vorzugsweise 2 bis 20 Gewichtsprozent, bezogen auf die eingesetzte Menge an Komponente (b1) und (b6) eingesetzt.

Als Komponente (b6) können auch Di- und/oder Polyamine mit primären und/oder sekundären Aminogruppen eingesetzt werden. Polyamine sind im wesentlichen Alkylen-Polyamine mit 1 bis 40 Kohlenstoffatomen, vorzugsweise etwa 2 bis 15 Kohlenstoffatomen. Sie können Substituenten tragen, die keine mit Isocyanat-Gruppen reaktionsfähige Wasserstoffatome haben. Beispiele sind Polyamine mit linearer oder verzweigter aliphatischer, cycloaliphatischer oder aromatischer Struktur und wenigstens zwei primären Aminogruppen. Als Diamine sind zu nennen Hydrazin, Ethylendiamin, Propylendiamin, 1,4-Butylendiamin, Piperazin, 1,4-Cyclohexyldimethylamin, Hexamethylendiamin-1,6, Trimethylhexamethylendiamin, Menthandiamin, Isophorondiamin, 4,4'-Diaminodicyclohexylmethan und Aminoethylethanolamin. Bevorzugte Diamine sind Hydrazin, Alkyl- oder Cycloalkyldiamine wie Propylendiamin und l-Amino-3-aminomethyl-3,5,5-trimethylcyclohexan. Es können auch Polyamine als Komponente (f) eingesetzt werden, die mehr als zwei Aminogruppen im Molekül enthalten. In diesen Fällen ist jedoch - z.B. durch Mitverwendung von Monoaminen - darauf zu achten, daß keine vernetzten Polyurethanharze erhalten werden. Solche brauchbaren Polyamine sind Diethylentriamin, Triethylentetramin, Dipropylendiamin und Dibutylentriamin. Als Beispiel für ein Monoamin wird Ethylhexylamin genannt.

Die erfindungsgemäß eingesetzte Komponente (I) wird hergestellt, indem eine Lösung des Polyurethanharzes (B) in einem organischen Lösemittel bzw. einem organischen Lösemittelgemisch bereitgestellt wird und in dieser Lösung ethylenisch ungesättigte Monomere oder ein Gemisch ethylenisch ungesättigter Monomere in einer radikalischen Polymerisation polymerisiert werden und das so erhaltene Reaktionsprodukt in eine wäßrige Dispersion überführt wird. Es ist bevorzugt, wassermischbare organische Lösemittel einzusetzen. Als Beispiele für brauchbare Lösemittel werden Butylglykol, 2-Methoxypropanol, n-Butanol, Methoxybutanol, n-Propanol, Ethylenglykolmonomethylether, Ethylenglykolmonoethylether, Ethylenglykolmonobutylether, Diethylenglykolmonomethylether, Diethylenglykolmonoethylether, Diethylenglykoldiethyleter, Diethylenglykolmonobutylether und 3-Methyl-3-methoxybutanol oder Mischungen aus diesen Lösemitteln genannt.

Bevorzugt werden Ketone, wie z.B. Aceton, Methylethylketon, Diethylketon und Methylisobutylketon.

Die radikalische Polymerisation wird bei Temperaturen von 80 bis 160°C, vorzugsweise 100 bis 160°C in den obengenannten organischen Lösemitteln bzw. Lösemittelgemischen durchgeführt.

Als Beispiele für brauchbare Polymerisationsinitiatoren werden freie Radikale bildende Initiatoren, wie z.B. Benzoylperoxid, Azobisisobutyronitril und t-Butylperbenzoat genannt.

Bei der Polymerisation kommt es auch zu Pfropfungsreaktionen zwischen dem Polyurethanharz (B) und der Komponente (A).

Als ethylenisch ungesättigte Monomere können praktisch alle radikalisch polymerisierbaren Monomere eingesetzt werden, wobei jedoch die üblichen Einschränkungen für Copolymerisationen gelten, die durch das Q- und e-Schema nach Alfrey und Price bzw. durch die Copolymerisationsparameter vorgegeben sind (vgl. z.B. Bandrup und Immergut, Polymer Handbook, 2nd ed. John Wiley + Sons, New York (1975).

Bevorzugt eingesetzte Komponenten (I) sind erhältlich, indem in einem organischen Lösemittel oder in einem Gemisch organischer Lösemittel

(a1) 10 bis 90, vorzugsweise 30 bis 60 Gew.-%, aliphatische oder cycloaliphatische Ester der Acrylsäure oder Methacrylsäure oder ein Gemisch aus solchen Estern,

(a2) 0 bis 1, vorzugsweise 0 Gew.-%, eines mindestens eine Hydroxylgruppe im Molekül tragenden ethylenisch ungesättigten Monomeren oder eines Gemisches aus solchen Monomeren,

(a3) 0 bis 30, vorzugsweise 1 bis 5 Gew.-%, eines mindestens eine Carboxylgruppe im Molekül tragenden ethylenisch ungesättigten Monomeren oder eines Gemisches aus solchen Monomeren und

(a4) 0 bis 7, vorzugsweise 1 bis 4 Gew.-%, eines von (a1), (a2) und (a3) verschiedenen ethylenisch ungesättigten Monomeren oder ein Gemisch aus solchen Monomeren

in Gegenwart von 10 bis 90, vorzugsweise 68 bis 38 Gew.-%, der Komponente (B) polymerisiert werden und das so erhaltene Reaktionsprodukt in eine wäßrige Dispersion überführt wird.

Als Komponente (a1) können z.B. eingesetzt werden: Cyclohexylacrylat, Cyclohexylmethacrylat, Alkylacrylate und Alkylmethacrylate mit bis zu 20 Kohlenstoffatomen im Alkylrest, wie z.B. Methyl-, Ethyl-, Propyl-, Butyl-, Hexyl-, Ethylhexyl-, Stearyl- und Laurylacrylat und -methacrylat oder Gemische aus diesen Monomeren.

Als Komponente (a1) wird vorzugsweise ein Alkylmethacrylat mit bis zu 20 Kohlenstoffatomen im Alkylrest oder eine Mischung aus solchen Alkylmethacrylaten eingesetzt. Als Komponente (a1) wird ganz besonders bevorzugt Methylmethacrylat eingesetzt.

Als Komponente (a2) können z.B. eingesetzt werden: Hydroxyalkylester der Acrylsäure, Methacrylsäure oder einer anderen $\alpha,\beta$-ethylenisch ungesättigten Carbonsäure. Diese Ester können sich von einem Alkylenglykol ableiten, das mit der Säure verestert ist, oder sie können durch Umsetzung der Säure mit einem Alkylenoxid erhalten werden. Als Komponente (ii) werden vorzugsweise Hydroxyalkylester der Acrylsäure und Methacrylsäure, in denen die Hydroxyalkylgruppe bis zu 4 Kohlenstoffatome enthält, oder Mischungen aus diesen Hydroxyalkylestern eingesetzt. Als Beispiele für derartige Hydroxyalkylester werden 2-Hydroxyethylacrylat, 2-Hydroxypropylacrylat, 2-Hydroxypropylmethacrylat, 3-Hydroxypropylacrylat, 3-Hydroxypropylmethacrylat, 2-Hydroxyethylmethacrylat, 4-Hydroxybutylacrylat oder 4-Hydroxybutyl(meth)acrylat genannt. Entsprechende Ester von anderen ungesättigten Säuren, wie z.B. Ethacrylsäure, Crotonsäure und ähnliche Säuren mit bis zu etwa 6 Kohlenstoffatomen pro Molekül können auch eingesetzt werden.

Als Komponente (a3) werden vorzugsweise Acrylsäure und/oder Methacrylsäure eingesetzt. Es können aber auch andere ethylenisch ungesättigte Säuren mit bis zu 6 Kohlenstoffatomen im Molekül eingesetzt werden. Als Beispiele für solche Säuren werden Ethacrylsäure, Crotonsäure, Maleinsäure, Fumarsäure und Itaconsäure genannt.

Als Komponente (a4) können z.B. eingesetzt werden: vinylaromatische Kohlenwasserstoffe, wie Styrol, $\alpha$-Alkylstyrol und Vinyltoluol, Acryl- und Methacrylamid und Acryl- und Methacrylnitril oder Gemische aus diesen Monomeren. Als Komponente (a4) können auch Verbindungen eingesetzt werden, die mindestens zwei radikalisch polymerisierbare Doppelbindungen im Molekül enthalten. Als Beispiele werden genannt: Divinylbenzol, p-Methyldivinylbenzol, o-Nonyldivinylbenzol, Ethandioldi(meth)-acrylat, 1,4-Butandioldi(meth)acrylat, 1,6-Hexandioldi-(meth)acrylat, Trimethylolpropantri(meth)acrylat, Pentaerythritdi(meth)acrylat, Allylmethacrylat, Diallylphthalat, Butandioldivinylether, Divinylethylenharnstoff, Divinylpropylenharnstoff, Maleinsäurediallylester usw.

Bevorzugt wird der Einsatz von difunktionellen ungesättigten Monomeren wie Butandioldiacrylat oder Hexandioldiacrylat. Bei Verwendung von Glycidylmethacrylat und Methacrylsäure entsteht das entsprechende Glycerindimethacrylat automatisch bei der Polymerisation. Die Art und Menge an polyungesättigten Monomeren ist mit den Reaktionsbedingungen (Katalysatoren, Reaktionstemperatur, Lösemittel) sorgfältig abzustimmen, um keine Gelierung zu erhalten. Die zugesetzte Menge an polyungesättigten Monomeren dient dazu, ohne Gelbildungen die mittlere Molmasse anzuheben. Bevorzugt ist es jedoch, kein polyungesättigtes Monomeres zuzusetzen.

Die als Komponente (A) eingesetzten ethylenisch ungesättigten Monomere werden vorzugsweise so ausgewählt, daß ein durch alleinige Polymerisation dieser Monomere hergestelltes Polymer eine Glasübergangstemperatur von +10 bis +80°C, vorzugsweise +20 bis +40°C aufweist.

Die Überführung des aus den Komponenten (A) und (B) hergestellten Reaktionsproduktes in eine wäßrige Dispersion erfolgt, indem die in dem Reaktionsprodukt enthaltenen, zur Anionenbildung befähigten Gruppen (vgl. beispielsweise (b4) und (a3); es ist auch möglich, durch Verwendung von carboxylgruppenhaltigen Polyesterdiolen als Komponente (b1) zur Anionenbildung befähigte Gruppen in die Komponente (A) einzuführen) vor oder während der Überführung des Reaktionsproduktes aus dem organischen Lösemittel bzw. Lösemittelgemisch in Wasser, das gegebenenfalls auch noch wassermischbare organische Lösemittel enthalten kann, ganz oder teilweise neutralisiert werden.

Zur Neutralisation können sowohl organische Basen als auch anorganische Basen, wie Ammoniak und Hydrazin, verwendet werden. Vorzugsweise werden primäre, sekundäre und tertiäre Amine, wie z.B. Ethylamin, Propylamin, Dimethylamin, Dibutylamin, Cyclohexylamin, Benzylamin, Morpholin, Piperidin und Triethanolamin verwendet. Besonders bevorzugt werden tertiäre Amine als Neutralisationsmittel eingesetzt, insbesondere Dimethylethanolamin, Triethylamin, Tripropylamin und Tributylamin.

Der Gehalt an zur Anionenbildung befähigten Gruppen in dem aus den Komponenten (A) und (B) hergestellten Reaktionsprodukt soll so hoch sein, daß die Komponente (I) eine Säurezahl (bezogen auf Feststoffgehalt) von 5 bis 200, vorzugsweise 10 bis 40, besonders bevorzugt 15 bis 30 aufweist. Die zur Anionenbildung befähigten Gruppen können ausschließlich in der Komponente (A) oder ausschließlich in der Komponente B) oder sowohl in der Komponente (A) als auch in der Komponente (B) enthalten sein. Es ist bevorzugt daß 50 bis 100, vorzugsweise 70 bis 100, besonders bevorzugt 100 % der zur Anionenbildung befähigten Gruppen in der Komponente (A) enthalten sind.

Die erfindungsgemäß eingesetzte Komponente (I) kann neben den anionischen bzw. zur Anionenbildung befähigte Gruppen auch noch nichtionische, stabilisierende Gruppen, wie z.B. Poly(oxyalkylen)gruppen, insbesondere Poly (oxyethylen)- und/oder Poly(oxypropylen)- und/oder Poly(oxyethylen) (oxypropylen)gruppen enthalten, wobei die Existenz derartiger Gruppen in der Komponente (A) weniger bevorzugt ist. Die Komponente (I) ist vorzugsweise frei von nichtionischen, stabilisierenden Gruppen der oben beschriebenen Art.

Es ist bevorzugt, daß die aus den Komponenten (A) und (B) hergestellte Komponente (I) eine Hydroxylzahl, bezogen auf Feststoffgehalt, von 0 bis 60, besonders bevorzugt von 0 bis 20, ein zahlenmitttleres Molekulargewicht von 2000 bis 20.000, besonders bevorzugt von 5000 bis 12.000 und eine Glasübergangstemperatur $T_G$ von +10 bis + 85°C, vorzugsweise von +20 bis +70°C aufweist.

Aus der nach Überführung des Reaktionsproduktes aus (A) und (B) in Wasser erhaltenen wäßrigen Dispersionen (Komponente (I)) kann ein Teil oder das gesamte organische Lösemittel abdestilliert werden. Die so erhaltenen wäßrigen Dispersionen enthalten Polymerteilchen, deren mittlere Teilchengröße zwischen 10 und 500 nm, vorzugsweise zwischen 60 und 100 nm liegen (Meßmethode: Laserlichtstreuung, Meßgerät: Malvern Autosizer 2 C).

Die erfindungsgemäß eingesetzten wäßrigen Lacke enthalten neben der Komponente (I) auch noch eine Komponente (II)). Die Komponente (II) besteht aus einer wäßrigen Lösung oder Dispersion eines in Wasser löslichen oder dispergierbaren Polyacrylatharzes oder eines in Wasser löslichen oder dispergierbaren Polyurethan- oder Polyesterharzes oder aus einer Mischung aus solchen wäßrigen Lösungen oder Dispersionen, wobei das Polyacrylatharz oder Polyurethanharz oder Polyesterharz oder die Mischung aus solchen Harzen eine Glasübergangstemperatur $T_G$ von +15 bis +85°C, vorzugsweise +15 bis +40°C aufweisen. Als Komponente (II) wird vorzugsweise eine wäßrige Lösung oder Dispersion eines in Wasser löslichen oder dispergierbaren Polyacrylatharzes, das eine Glasübergangstemperatur $T_G$ von +15 bis +85°C, vorzugsweise + 15 bis +40°C aufweist, eingesetzt. Unter Polyacrylatharzen werden Copolymere verstanden, die mindestens einen Ester der Acrylsäure oder Methacrylsäure enthalten. Um Polyacrylatharze wasserlöslich bzw. wasserdispergierbar zu machen, werden säure- oder basische Gruppen, die durch Neutralisation mit Basen bzw. Säuren in kationische oder anionische Gruppen überführt werden in die Copolymere eingebaut. Die Wasserlöslichkeit bzw. Wasserdispergierbarkeit von Polyacrylatharzen kann auch durch Einbau von nichtionischen hydrophilen Gruppierungen wie z. B. Poly(oxyethylen)- oder Poly(oxypropylen)gruppen in die Copolymere erreicht werden. Es ist auch möglich, Polyacrylatharze durch eine Kombination aus anionischen oder kationischen und nichtionische hydrophile Gruppen wasserlöslich bzw. wasserdispergierbar zu machen. Erfindungsgemäß werden Polyacrylatharze, die durch anionische Gruppen wasserlöslich bzw. wasserdispergierbar gemacht worden sind, bevorzugt eingesetzt. Polyacrylatharze der oben beschriebenen Art sind in großer Auswahl im Handel erhältlich und können vom Fachmann auch leicht hergestellt werden (vgl. z. B. Lehrbuch der Lacke und Beschichtungen, Band I, Teile 1 bis 3, 1974, Verlag W.A. Colomb in der H. Heenemann GmbH, Berlin-Oberschwandorf). Glasübergangstemperaturen von Polyacrylatharzen können näherungsweise nach folgender Formel berechnet werden:

$$\frac{1}{T_G} \qquad \sum_{n=1}^{n=x} \qquad \frac{W_n}{T_{Gn}}$$

$T_G$ = Glasübergangstemperatur des Polyacrylatharzes

x = Anzahl der im Polyacrylatharz einpolymerisierten verschiedenen Monomeren.

$W_n$ = Gewichtsanteil des n-ten Monomers

$T_{Gn}$= Glasübergangstemperatur des Homopolymers aus dem n-ten Monomer

Als Monomere zur Herstellung der Polyacrylatharze können die zur Herstellung der Komponente (I) genannten ethylenisch ungesättigten Monomere eingesetzt werden. Ganz besonders bevorzugt werden als Komponente (II) Polyacrylatharze auf Basis von Styrol, n-Butylmethacrylat, Butylacrylat, Methacrylsäure und/oder Acrylsäure mit einer Glasübergangstemperatur von 20 bis 40°C, einem zahlenmittleren Molekulargewicht von 3000 bis 5000 und einem gewichtsmittleren Molekulargewicht von 38000 bis 58000 eingesetzt.

Als Komponente (II) können auch in Wasser lösliche Polyester- und/oder Polyurethanharze eingesetzt werden, die eine Glasübergangstemperatur $T_G$ von +15 bis +85°C, vorzugsweise +15 bis +40°C aufweisen. Derartige Harze sind im Handel in großer Auswahl erhältlich und sind dem Fachmann so gut bekannt, daß sie hier nicht näher beschrieben werden müssen (vgl. z. B. Lehrbuch der Lacke und Beschichtungen, Band I, Teil 1 bis 3, 1974, Verlag W.A. Colomb in der H. Heenemann GmbH, Berlin-Oberschwandorf).

Neben den Komponenten (I) und (II) enthalten die erfindungsgemäß eingesetzten wäßrigen Lacke die für wäßrige Lacke, welche zur Herstellung von Decklackschichten verwendet werden, üblichen Pigmente (wie z.B. Titandioxid, Eisenoxidpigmente und Ruß) in den für Lacke dieser Art üblichen Mengen.

Die Komponente (I) und (II) werden so gemischt, daß die Komponente (I) und (II) in den erfindungsgemäß eingesetzten wäßrigen Lacken in einem Gewichtsverhältnis, bezogen auf Feststoff, von 1,0 : 0,5 bis 1,0 : 5,0, vorzugsweise 1,0 : 1,5 bis 1,0 : 2,5, besonders bevorzugt 1,0 : 1,75 bis 1,0 : 2,25 vorliegen.

Die erfindungsgemäß eingesetzten wäßrigen Lacke können neben den Komponenten (I) und (II) auch noch Vernetzungsmittel oder Mischungen aus Vernetzungsmitteln enthalten. Als Beispiele für Vernetzungsmittel werden Aminoplastharze und gegebenenfalls blockierte Polyisocyanate genannt. Es ist jedoch bevorzugt, daß die erfindungsgemäß eingesetzten wäßrigen Lacke keine Vernetzungsmittel enthalten.

Den erfindungsgemäß eingesetzten wäßrigen Lacken können selbstverständlich übliche anorganische oder organische Additive, wie z.B. Verdicker zugesetzt werden. So wirken als Verdicker beispielsweise wasserlösliche Celluloseether, wie Hydroxyethylcellulose, Methylcellulose oder Carboxymethylcellulose sowie synthetische Polymere mit ionischen und/oder assoziativ wirkenden Gruppen, wie Polyvinylalkohol, Poly(meth)acrylamid, Poly(meth)-acrylsäure, Polyvinylpyrrolidon, Styrol-Maleinsäureanhydrid oder Ethylen-Maleinsäureanhydrid-Copolymere und ihre Derivate oder auch hydrophob modifizierte ethoxylierte Urethane oder Polyacrylate sowie carboxylgruppenhaltige Polyacrylat-Copolymere mit einer Säurezahl von 60 bis 780, bevorzugt 200 bis 500.

Die erfindungsgemäß eingesetzten Lacke können durch Spritzen, Rakeln, Tauchen, Walzen, vorzugsweise durch airless und pneumatisches Spritzen appliziert werden.

In den folgenden Beispielen wird die Erfindung näher erläutert. Alle Angaben zu Prozenten und Teilen sind Gewichtsangaben, wenn nicht ausdrücklich etwas anderes angegeben wird.

1. Herstellung der Komponente (I)

1.1. Dispersion (I)-1

In einem 4 l Reaktionsgefäß mit Rührer, Rückflußkühler und zwei Zulaufgefäßen werden zu einer Mischung aus 472,5 g eines Polyesterpolyols mit einem zahlenmittleren Molekulargewicht von 1400 (hergestellt durch Umsetzung von dimerisierter Fettsäure (Pripol® 1009, Hersteller: Unichema), Isophthalsäure, Adipinsäure, Neopentylglykol und Hexandiol in einem Molverhältnis von 1,5 : 1,0 : 0,5 : 1,5 : 2,5), 25,5 g Neopentylglykol, 8,1 g Trimethylolpropanmonoallylether, 0,5 g Dibutylzinndilaurat und 471,9 g Methylisobutylketon 174,3 g Isophorondiisocyanat gegeben. Diese Reaktionsmischung wird so lange bei 105°C gehalten, bis der Isocyanatgehalt auf 1,1 % abgesunken ist. Nach Zugabe von 40,5 g Trimethylolpropan wird die Temperatur so lange bei 105°C gehalten, bis keine Isocyanatgruppen mehr nachweisbar sind.

Bei einer Temperatur von 105°C wird anschließend ein Gemisch aus 420 g Methylmethacrylat, 246 g n-Butylacrylat und 55,5 g Acrylsäure innerhalb von 3 Stunden zu dem Reaktionsgemisch gegeben. Gleichzeitig zur Zugabe dieses Gemisches werden 168,9 g einer 13 %igen Lösung von t-Butylperethylhexanoat in Methylisobutylketon innerhalb von 3,5 Stunden zudosiert.

Die Mischung wird für weitere 2,5 Stunden bei 105°C gehalten. Dann werden 45 g Dimethylethanolamin und anschließend 2300 g deionisiertes Wasser innerhalb von 2 Stunden unter starkem Rühren langsam zugegeben. Schließlich wird das Methylisobutylketon im Vakuum abdestilliert. Es wird eine wäßrige Dispersion mit einem Feststoffgehalt von 41 % erhalten.

1.2. Dispersion (I)-2

In einem 4 l Reaktionsgefäß mit Rührer, Rückflußkühler und zwei Zulaufgefäßen werden zu einer Mischung aus 460,0 g eines Polyesterpolyols mit einem zahlenmittleren Molekulargewicht von 1200 (hergestellt durch Umsetzung von dimerisierter Fettsäure (Pripol® 1009, Hersteller: Unichema), Hexahydro-Phthalsäureanhydrid und Hexandiol in einem Molverhältnis von 0,75 : 2,25 : 4,0) 29,6 g Neopentylglykol, 9,6 g Trimethylolpropanmonoallylether, 1,1 g Dibutylzinndilaurat und 490,6 g Methylisobutylketon 203,0 g Isophorondiisocyanat gegeben. Diese Reaktionsmischung wird so lange bei 105°C gehalten, bis der Isocyanatgehalt auf 1,3 % abgesunken ist. Nach Zugabe von 49,2 g Trimethylolpropan wird die Temperatur so lange bei 105°C gehalten, bis keine Isocyanatgruppen mehr nachweisbar sind.

Bei einer Temperatur von 105°C wird anschließend ein Gemisch aus 432,3 g Methylmethacrylat, 253,2 g n-Butylacrylat und 57,8 g Acrylsäure innerhalb von 3 Stunden zu dem Reaktionsgemisch gegeben. Gleichzeitig zur Zugabe dieses Gemisches werden 173,5 g einer 13 %igen Lösung von t-Butylperethylhexanoat in Methylisobutylketon innerhalb von 3,5 Stunden zudosiert.

Die Mischung wird für weitere 2,5 Stunden bei 105°C gehalten. Dann werden 46,6 g Dimethylethanolamin und anschließend 2300 g deionisiertes Wasser innerhalb von 2 Stunden unter starkem Rühren langsam zugegeben. Schließlich wird das Methylisobutylketon im Vakuum abdestilliert. Es wird eine wäßrige Dispersion mit einem Feststoffgehalt von 41 % erhalten.

1.3. Dispersion (I)-3

In einem 4 1 Reaktionsgefäß mit Rührer, Rückflußkühler und zwei Zulaufgefäßen werden zu einer Mischung aus 677,3 g eines Polyesterpolyols mit einem zahlenmittleren Molekulargewicht von 1400 (hergestellt durch Umsetzung von dimerisierter Fettsäure (Pripol® 1009, Hersteller: Unichema), Isophthalsäure und Neopentylglykol in einem Molverhältnis von 1,5 : 1,5 : 4,0) 36,6 g Neopentylglykol, 11,6 g Trimethylolpropanmonoallylether, 0,6 g Dibutylzinndilaurat und 675,4 g Methylisobutylketon 249,7 g Isophorondiisocyanat gegeben. Diese Reaktionsmischung wird so lange bei 105°C gehalten, bis der Isocyanatgehalt auf 1,1 % abgesunken ist. Nach Zugabe von 45,1 g Neopentylglykol wird die Temperatur so lange bei 105°C gehalten, bis keine Isocyanatgruppen mehr nachweisbar sind.

Bei einer Temperatur von 105°C wird anschließend ein Gemisch aus 305,6 g Methylmethacrylat, 141,9 g n-Butylacrylat, 37,1 g Styrol und 57,8 g Acrylsäure innerhalb von 3 Stunden zu dem Reaktionsgemisch gegeben. Gleichzeitig zur Zugabe dieses Gemisches werden 122,9 g einer 13 %igen Lösung von t-Butylperethylhexanoat in Methylisobutylketon innerhalb von 3,5 Stunden zudosiert.

Die Mischung wird für weitere 2,5 Stunden bei 105°C gehalten. Dann werden 48 g Dimethylethanolamin und anschließend 2300 g deionisiertes Wasser innerhalb von 2 Stunden unter starkem Rühren langsam zugegeben. Schließlich wird das Methylisobutylketon im Vakuum abdestilliert. Es wird eine wäßrige Dispersion mit einem Feststoffgehalt von 41 % erhalten.

2. Herstellung erfindungsgemäßer wäßriger Lacke

Lack 1

23 Teile der Dispersion (I)-1 werden mit 0,3 Teilen eines handelsüblichen Silikon-Entschäumers und 6,4 Teilen eines Rotpigments auf Basis von Eisenoxid 15 Minuten lang bei 21 m/s vordispergiert und anschließend 30 Minuten lang auf einer Perlmühle bei max. 50°C vermahlen. Anschließend werden weitere 32,8 Teile der Dispersion (I)-1, 32,2 Teile einer handelsüblichen wäßrigen Dispersion (Feststoffgehalt 45 Gew.-%; pH-Wert bei 25°C: 8,5 - 9,5; Viskosität bei 25°C: ca. 400 cps) eines Copolymeren aus Styrol, n-Butylmethacrylat, n-Butylacrylat und Methacrylsäure (Hydroxylzahl: 30; Säurezahl: 15; Glasübergangstemperatur $T_G$ = 19°C; zahlenmittleres Molekulargewicht Mn = 4000; gewichtsmittleres Molekulargewicht: 48000), 1 Teil eines handelsüblichen Polyurethanverdickers und 4,3 Teile deionisiertes Wasser unter Rühren zugegeben.

Lack 2

Lack 2 wird wie Lack 1 hergestellt mit dem einzigen Unterschied, daß anstelle der Dispersion (I)-1 die Dispersion (I)-2 eingesetzt wird.

Lack 3

Lack 3 wird wie Lack 1 hergestellt mit den einzigen Unterschied, daß anstelle der Dispersion (I)-1 die Dispersion (I)-3 eingesetzt wird.

3. Applikation der erfindungsgemäßen wäßrigen Lacke und Prüfung der erhaltenen Lackfilme

Die Lacke 1, 2 und 3 werden mit einer Fließbecher-pistole bei einem Zerstäuberdruck von 4 - 5 bar auf mit einem handelsüblichen Elektrotauchlack beschichtete Stahlbleche so lackiert, daß Trockenfilmstärken von 50 - 60 μm erhalten werden.

Nach kurzer Abdunstzeit wird 30 min. lang bei 80°C getrocknet. Danach wird für 96 Stunden ein Salzsprühtest nach DIN 50 021 und für 120 Stunden ein Konstantklimatest nach DIN 50017 durchgeführt. Es werden keine Blasen und eine sehr gute Haftung zum Substrat festgestellt.

**Patentansprüche**

1. Verfahren zur Herstellung von Decklackschichten, bei dem ein wäßriger Lack auf das Substrat aufgebracht und die erhaltene Lackschicht getrocknet wird, dadurch gekennzeichnet, daß der wäßrige Lack als Bindemittel eine Kombination aus den Komponenten (I) und (II) enthält, wobei die Komponenten (I) und (II) in einem Gewichtsverhältnis, bezogen auf Feststoff, von 1,0 : 0,5 bis 1,0 : 5,0 vorliegen und die Komponente (I) eine wäßrige Dispersion eines Polymeren ist, die erhältlich ist, indem in einem organischen Lösemittel oder in einem Gemisch organischer Lösemittel

(A) ethylenisch ungesättigte Monomere oder ein Gemisch ethylenisch ungesättigter Monomere in Gegenwart

(B) eines Polyurethanharzes, das ein zahlenmittleres Molekulargewicht von 200 bis 30.000, aufweist und das im statistischen Mittel pro Molekül 0,05 bis 1,1 polymerisierbare Doppelbindungen enthält,

polymerisiert werden und das so erhaltene Reaktionsprodukt in eine wäßrige Dispersion überführt wird und die Komponente (II) eine wäßrige Lösung oder Dispersion eines in Wasser löslichen oder dispergierbaren Polyacrylatharzes oder eines in Wasser löslichen oder dispergierbaren Polyurethan- oder Polyesterharzes oder eine Mischung aus solchen wäßrigen Lösungen oder Dispersionen ist, wobei das Polyacrylatharz oder Polyurethanharz oder Polyesterharz oder die Mischung aus solchen Harzen eine Glasübergangstemperatur $T_G$ von +15 bis +85°C aufweist.

2.  Verfahren nach Anspruch 1, dadurch gekennzeichnet, daß die erhaltene Lackschicht bei einer Temperatur, die unter 110°C liegt, getrocknet wird.

3.  Verfahren nach Anspruch 1 oder 2, dadurch gekennzeichnet, daß die Komponente (I) erhältlich ist, indem in einem organischen Lösemittel oder in einem Gemisch organischer Lösemittel

    (a1) 10 bis 90 Gew.- aliphatische oder cycloaliphatische Ester der Acrylsäure oder Methacrylsäure oder ein Gemisch aus solchen Estern,

    (a2) 0 bis 1 Gew.-% eines mindestens eine Hydroxylgruppe im Molekül tragenden ethylenisch ungesättigten Monomeren oder eines Gemisches aus solchen Monomeren,

    (a3) 0 bis 30 Gew.-% eines mindestens eine Carboxylgruppe im Molekül tragenden ethylenisch ungesättigten Monomeren oder eines Gemisches aus solchen Monomeren und

    (a4) 0 bis 7 Gew.-% eines von (a1), (a2) und (a3) verschiedenen ethylenisch ungesättigten Monomeren oder ein Gemisch aus solchen Monomeren

    in Gegenwart von 10 bis 90 Gew.-% der Komponente (B) polymerisiert werden und das so erhaltene Reaktionsprodukt in eine wäßrige Dispersion überführt wird.

4.  Verfahren nach einem der Ansprüche 1 bis 3, dadurch gekennzeichnet, daß die Komponente (B) erhältlich ist, indem

    (b1) ein gegebenenfalls polymerisierbare Doppelbindungen aufweisendes Polyester- und/oder Polyetherpolyol mit einem zahlenmittleren Molekulargewicht von 400 bis 5000 oder ein Gemisch aus solchen Polyester- und/oder Polyetherpolyolen

    (b2) ein Polyisocyanat oder ein Gemisch aus Polyisocyanaten

    (b3) gegebenenfalls eine Verbindung, die neben einer polymerisierbaren Doppelbindung mindestens noch eine gegenüber NCO- Gruppen reaktive Gruppe enthält oder ein Gemisch aus solchen Verbindungen

    (b4) gegebenenfalls eine Verbindung, die mindestens eine gegenüber Isocyanatgruppen reaktive und mindestens eine zur Anionenbildung befähigte Gruppe im Molekül aufweist oder ein Gemisch aus solchen Verbindungen

    (b5) gegebenenfalls eine Verbindung, die mindestens eine gegenüber NCO- Gruppen reaktive Gruppe und mindestens eine Poly(oxyalkylen)gruppe im Molekül aufweist, oder ein Gemisch aus solchen Verbindungen und gegebenenfalls

    (b6) eine Hydroxyl- und/oder Aminogruppen enthaltende organische Verbindung mit einem Molekulargewicht von 60 bis 600, oder ein Gemisch aus solchen Verbindungen

zu einem Polyurethanharz umgesetzt werden, das ein zahlenmittleres Molekulargewicht von 200 bis 30.000 aufweist und das im statistischen Mittel pro Molekül 0,05 bis 1,1 polymerisierbare Doppelbindungen enthält.

5. Verfahren nach einem der Ansprüche 1 bis 4, dadurch gekennzeichnet, daß bei der Herstellung der Komponente (B) als Komponente (b1) ein Polyesterpolyol, das unter Verwendung einer polymerisierten Fettsäure mit 10 bis 44 C-Atomen im Molekül oder einer Mischung aus solchen polymerisierten Fettsäuren hergestellt worden ist, eingesetzt wird.

6. Verfahren nach einem der Ansprüche 1 bis 4, dadurch gekennzeichnet, daß die Komponente (I) ein zahlenmittleres Molekulargewicht von 2000 bis 20.000, eine Säurezahl von 5 bis 200, eine Hydroxylzahl von 0 bis 60 und eine Glasübergangstemperatur $T_G$ von +10 bis +85°C aufweist.

7. Verfahren nach einem der Ansprüche 1 bis 6, dadurch gekennzeichnet, daß die Komponente (II) eine wäßrige Dispersion eines Polyacrylatharzes ist.

8. Wäßriger Lack, dadurch gekennzeichnet, daß er als Bindemittel eine Kombination aus den Komponenten (I) und (II) enthält, wobei die Komponenten (I) und (II) in einem Gewichtsverhältnis, bezogen auf Feststoff, von 1,0 : 0,5 bis 1,0 : 5,0 vorliegen und die Komponente (I) eine wäßrige Dispersion eines Polymeren ist, die erhältlich ist, indem in einem organischen Lösemittel oder in einem Gemisch organischer Lösemittel

    (A) ethylenisch ungesättigte Monomere oder ein Gemisch ethylenisch ungesättigter Monomere in Gegenwart

    (B) eines Polyurethanharzes, das ein zahlenmittleres Molekulargewicht von 200 bis 30.000 aufweist und das im statistischen Mittel pro Molekül 0,05 bis 1,1 polymerisierbare Doppelbindungen enthält,

polymerisiert werden und das so erhaltene Reaktionsprodukt in eine wäßrige Dispersion mit einer mittleren Teilchengröße zwischen 10 und 500 nm überführt wird und die Komponente (II) eine wäßrige Lösung oder Dispersion eines in Wasser löslichen oder dispergierbaren Polyacrylatharzes oder eines in Wasser löslichen oder dispergierbaren Polyurethan- oder Polyesterharzes oder eine Mischung aus solchen wäßrigen Lösungen oder Dispersionen ist, wobei das Polyacrylatharz oder Polyurethanharz oder die Mischung aus solchen Harzen eine Glasübergangstemperatur $T_G$ von +15 bis +85°C aufweist.

9. Wäßriger Lack nach Anpruch 8, dadurch gekennzeichnet, daß die Komponente (I) erhältlich ist, indem in einem organischen Lösemittel oder in einem Gemisch organischer Lösemittel

    (a1) 10 bis 90 Gew.-%, aliphatische oder cycloaliphatische Ester der Acrylsäure oder Methacrylsäure oder ein Gemisch aus solchen Estern,

    (a2) 0 bis 1 Gew.-%, eines mindestens eine Hydroxylgruppe im Molekül tragenden ethylenisch ungesättigten Monomeren oder eines Gemisches aus solchen Monomeren,

    (a3) 0 bis 30 Gew.-%, eines mindestens eine Carboxylgruppe im Molekül tragenden ethylenisch ungesättigten Monomeren oder eines Gemisches aus solchen Monomeren und

    (a4) 0 bis 7 Gew.-%, eines von (a1), (a2) und (a3) verschiedenen ethylenisch ungesättigten Monomeren oder ein Gemisch aus solchen Monomeren

in Gegenwart von 10 bis 90 Gew.-% der Komponente (B) polymerisiert werden und das so erhaltene Reaktionsprodukt in eine wäßrige Dispersion überführt wird.

10. Wäßriger Lack nach Anspruch 8 oder 9, dadurch gekennzeichnet, daß die Komponente (B) erhältlich ist, indem

    (b1) ein gegebenenfalls polymerisierbare Doppelbindungen aufweisendes Polyester- und/oder Polyetherpolyol mit einem zahlenmittleren Molekulargewicht von 400 bis 5000 oder ein Gemisch aus solchen Polyester- und/oder Polyetherpolyolen

    (b2) ein Polyisocyanat oder ein Gemisch aus Polyisocyanaten

(b3) gegebenenfalls eine Verbindung, die neben einer polymerisierbaren Doppelbindung mindestens noch eine gegenüber NCO- Gruppen reaktive Gruppe enthält oder ein Gemisch aus solchen Verbindungen

(b4) gegebenenfalls eine Verbindung, die mindestens eine gegenüber Isocyanatgruppen reaktive und mindestens eine zur Anionenbildung befähigte Gruppe im Molekül aufweist oder ein Gemisch aus solchen Verbindungen

(b5) gegebenenfalls eine Verbindung, die mindestens eine gegenüber NCO- Gruppen reaktive Gruppe und mindestens eine Poly(oxyalkylen)gruppe im Molekül aufweist, oder ein Gemisch aus solchen Verbindungen und gegebenenfalls

(b6) eine Hydroxyl- und/oder Aminogruppen enthaltende organische Verbindung mit einem Molekulargewicht von 60 bis 600, oder ein Gemisch aus solchen Verbindungen

zu einem Polyurethanharz umgesetzt werden, das ein zahlenmittleres Molekulargewicht von 200 bis 30000 aufweist und das im statistischen Mittel pro Molekül 0,05 bis 1,1 polymerisierbare Doppelbindungen enthält.

## Claims

1. Process for preparing topcoat layers, in which an aqueous coating is applied to the substrate and the resulting coating layer is dried, characterized in that the aqueous coating contains a binder which is a combination of components (I) and (II) where components (I) and II are present in a weight ratio, relative to solids, of 1.0:0.5 to 1.0: 5.0 and component (I) is an aqueous dispersion of a polymer obtainable by polymerizing

    (A) ethylenically unsaturated monomers or a mixture of ethylenically unsaturated monomers in the presence of (B) a polyurethane resin having a number-average molecular weight of 200 to 30,000 and containing on statistical average 0.05 to 1.1 polymerizable double bonds per molecule

    in an organic solvent or in a mixture of organic solvents and converting the resulting reaction product intro an aqueous dispersion and component (II) is an aqueous solution or dispersion of a water-soluble or -dispersible polyacrylate resin or of a water-soluble or -dispersible polyurethane or polyester resin or a mixture of such aqueous solutions or dispersions, the polyacrylate resin or polyurethane resin or polyester resin or the mixture of such resins having a glass transition temperature $T_G$ of +15 to +85°C.

2. Process according to Claim 1, characterized in that the coating film obtained is dried at a temperature below 110°C.

3. Process according to Claim 1 or 2, characterized in that component (I) is obtainable by polymerizing

    (a1) 10 to 90% by weight of aliphatic or cycloaliphatic esters of acrylic acid or methacrylic acid or a mixture of such esters,
    (a2) 0 to 1% by weight of an ethylenically unsaturated monomer carrying at least one hydroxyl group in the molecule or of a mixture of such monomers,
    (a3) 0 to 30% by weight of an ethylenically unsaturated monomer carrying at least one carboxyl group in the molecule or of a mixture of such monomers and
    (a4) 0 to 7% by weight of an ethylenically unsaturated monomer other than (a1), (a2) and (a3) or a mixture of such monomers

    in an organic solvent or in a mixture of organic solvents in the presence of 10 to 90% by weight of component (B) and converting the resulting reaction product into an aqueous dispersion.

4. Process according to one of Claims 1 to 3, characterized in that component (B) is obtainable by reacting

    (b1) a polyester polyol and/or polyether polyol which, if desired, contains polymerizable double bonds and has a number-average molecular weight of 400 to 5,000 or a mixture of such polyester polyols and/or polyether polyols
    (b2) a polyisocyananate [sic] or a mixture of polyisocyanates
    (b3) if desired, a compound containing, apart from a polymerizable double bond, at least one more group which is reactive towards NCO groups or a mixture of such compounds

(b4) if desired, a compound containing, in the molecule, at least one group which is reactive towards isocyanate groups and at least one group which is capable of anion formation or a mixture of such compounds

(b5) if desired, a compound containing, in the molecule, at least one group which is reactive towards NCO groups and at least one poly(oxyalkylene) group or a mixture of such compounds and, if desired,

(b6) a hydroxyl- and/or amino-containing organic compound having a molecular weight of 60 to 600 or a mixture of such compounds

to give a polyurethane resin which has a number-average molecular weight of 200 to 30,000 and contains on statistical average 0.05 to 1.1 polymerizable double bonds per molecule.

5. Process according to one of Claims 1 to 4, characterized in that the component (b1) used when preparing component (B) is a polyester polyol prepared using a polymerized fatty acid having 10 to 44 carbon atoms in the molecule or a mixture of such polymerized fatty acids.

6. Process according to one of Claims 1 to 4, characterized in that component (I) has a number-average molecular weight of 2,000 to 20,000, an acid number of 5 to 200, a hydroxyl number of 0 to 60 and a glass transition temperature $T_G$ of +10 to +85°C.

7. Process according to one of Claims 1 to 6, characterized in that component (II) is an aqueous dispersion of a polyacrylate resin.

8. Aqueous coating, characterized in that it contains a binder which is a combination of components (I) and (II) where components (I) and (II) are present in a weight ratio, relative to solids, of 1.0:0.5 to 1.0:5.0 and component (I) is an aqueous dispersion of a polymer obtainable by polymerizing

(A) ethylenically unsaturated monomers or a mixture of ethylenically unsaturated monomers in the presence of

(B) a polyurethane resin having a number-average molecular weight of 200 to 30,000 and containing on statistical average 0.05 to 1.1 polymerizable double bonds per molecule

in an organic solvent or in a mixture of organic solvents and converting the resulting reaction product into an aqueous dispersion and component (II) is an aqueous solution or dispersion of a water-soluble or -dispersible polyacrylate resin or of a water-soluble or -dispersible polyurethane or polyester resin or a mixture of such aqueous solutions or dispersions, the polyacrylate resin or polyurethane resin or the mixture of such resins having a glass transition temperature $T_G$ of -15 to -85°C.

9. Aqueous coating according to Claim 8, characterized in that component (I) is obtainable by polymerizing

(a1) 10 to 90% by weight of aliphatic or cycloaliphatic esters of acrylic acid or methacrylic acid or a mixture of such esters,

(a2) 0 to 1% by weight of an ethylenically unsaturated monomer carrying at least one hydroxyl group in the molecule or of a mixture of such monomers,

(a3) 0 to 30% by weight of an ethylenically unsaturated monomer carrying at least one carboxyl group in the molecule or of a mixture of such monomers and

(a4) 0 to 7% by weight of an ethylenically unsaturated monomer other than (a1), (a2) and (a3) or a mixture of such monomers

in an organic solvent or in a mixture of organic solvents in the presence of 10 to 90% by weight of component (B) and converting the resulting reaction product into an aqueous dispersion.

10. Aqueous coating according to claim 8 or 9, characterized in that component (B) is obtainable by reacting

(b1) a polyester polyol and/or polyether polyol which, if desired, contains polymerizable double bonds and has a number-average molecular weight of 400 to 5,000 or a mixture of such polyester polyols and/or polyether polyols

(b2) a polyisocyananate [sic] or a mixture of polyisocyanates

(b3) if desired, a compound containing, apart from a polymerizable double bond, at least one more group which is reactive towards NCO groups or a mixture of such compounds

(b4) if desired, a compound containing, in the molecule, at least one group which is reactive towards isocyanate groups and at least one group which is capable of anion formation or a mixture of such compounds
(b5) if desired, a compound containing, in the molecule, at least one group which is reactive towards NCO groups and at least one poly(oxyalkylene) group or a mixture of such compounds and, if desired,
(b6) a hydroxyl- and/or amino-containing organic compound having a molecular weight of 60 to 600 or a mixture of such compounds

to give a polyurethane resin which has a number-average molecular weight of 200 to 30,000 and contains on statistical average 0.05 to 1.1 polymerizable double bonds per molecule.

**Revendications**

1. Procédé de production de couches de vernis de finition, dans lequel un vernis aqueux est appliqué sur le substrat et la couche de vernis résultante est séchée, caractérisé en ce que le vernis aqueux contient, en tant que liant, une combinaison des composants (I) et (II), où les composants (I) et (II) sont présents en un rapport pondéral, par rapport aux matières solides, de 1,0:0,5 à 1,0:5,0, et le composant (I) est une dispersion aqueuse d'un polymère, pouvant être obtenue en polymérisant, dans un solvant organique ou dans un mélange de solvants organiques,

(A) des monomères éthyléniquement insaturés ou un mélange de monomères éthyléniquement insaturés en présence de
(B) une résine de polyuréthanne ayant un poids moléculaire moyen en nombre de 200 à 30 000 et contenant, en moyenne statistique, de 0,05 à 1,1 double liaison polymérisable par molécule,

et en transformant le produit de réaction résultant en une dispersion aqueuse, et le composant (II) est une solution ou dispersion aqueuse d'une résine de polyacrylate hydrosoluble ou dispersable dans l'eau ou d'une résine de polyuréthanne ou de polyester hydrosoluble ou dispersable dans l'eau ou un mélange de telles solutions ou dispersions aqueuses, la résine de polyacrylate ou la résine de polyuréthanne ou la résine de polyester ou le mélange de telles résines ayant une température de transition vitreuse $T_v$ de +15 à +85°C.

2. Procédé selon la revendication 1, caractérisé en ce que la couche de vernis résultante est séchée à une température inférieure à 110°C.

3. Procédé selon la revendication 1 ou 2, caractérisé en ce que le composant (I) peut être obtenu en polymérisant, dans un solvant organique ou dans un mélange de solvants organiques,

(a1) de 10 à 90% en poids d'esters aliphatiques ou cycloaliphatiques de l'acide acrylique ou de l'acide méthacrylique ou d'un mélange de tels esters,
(a2) de 0 à 1% en poids d'un monomère éthyléniquement insaturé portant au moins un groupe hydroxyle dans la molécule ou d'un mélange de tels monomères,
(a3) de 0 à 30% en poids d'un monomère éthyléniquement insaturé portant au moins un groupe carboxyle dans la molécule ou d'un mélange de tels monomères et
(a4) de 0 à 7% en poids d'un monomère éthyléniquement insaturé différent de (a1), (a2) et (a3) ou d'un mélange de tels monomères

en présence de 10 à 90% en poids du composant (B) et en transformant le produit de réaction résultant en une dispersion aqueuse.

4. Procédé selon l'une quelconque des revendications 1 à 3, caractérisé en ce que le composant (B) peut être obtenu en faisant réagir

(b1) un polyester- et/ou polyéther-polyol renfermant éventuellement des doubles liaisons polymérisables, ayant un poids moléculaire moyen en nombre de 400 à 5 000, ou un mélange de tels polyester- et/ou polyéther-polyols
(b2) un polyisocyanate ou un mélange de polyisocyanates
(b3) éventuellement un composé renfermant, en plus d'une double liaison polymérisable, au moins encore un groupe réactif vis-à-vis des groupes NCO, ou un mélange de tels composés,
(b4) éventuellement un composé renfermant au moins un groupe réactif vis-à-vis des groupes isocyanate et au moins un groupe capable de former des anions dans la molécule, ou un mélange de tels composés,
(b5) éventuellement un composé renfermant au moins un groupe réactif vis-à-vis des groupes NCO et au moins un groupe polyoxyalkylène dans la molécule, ou un mélange de tels composés, et éventuellement
(b6) un composé organique renfermant des groupes hydroxyle et/ou amino, ayant un poids moléculaire de 60 à 600, ou un mélange de tels composés

pour former une résine de polyuréthanne ayant un poids moléculaire en nombre de 200 à 30 000 et renfermant, en moyenne statistique, de 0,05 à 1,1 double liaison polymérisable par molécule.

5. Procédé selon l'une quelconque des revendications 1 à 4, caractérisé en ce que l'on utilise en tant que composant (b1), pour la préparation du composant (B), un polyester-polyol préparé en employant un acide gras polymérisé ayant de 10 à 44 atomes de carbone dans la molécule ou un mélange de tels acides gras polymérisés.

6. Procédé selon l'une quelconque des revendications 1 à 4, caractérisé en ce que le composant (I) présente un poids moléculaire moyen en nombre de 2 000 à 20 000, un indice d'acide de 5 à 200, un indice d'hydroxyle de 0 à 60 et une température de transition vitreuse $T_v$ de +10 à +85°C.

7. Procédé selon l'une quelconque des revendications 1 à 6, caractérisé en ce que le composant (II) est une dispersion aqueuse d'une résine de polyacrylate.

8. Vernis aqueux, caractérisé en ce que le vernis aqueux contient, en tant que liant, une combinaison des composants (I) et (II), où les composants (I) et (II) sont présents en un rapport pondéral, par rapport aux matières solides, de 1,0:0,5 à 1,0:5,0, et le composant (I) est une dispersion aqueuse d'un polymère, pouvant être obtenue en polymérisant, dans un solvant organique ou dans un mélange de solvants organiques,

(A) des monomères éthyléniquement insaturés ou un mélange de monomères éthyléniquement insaturés en présence de
(B) une résine de polyuréthanne ayant un poids moléculaire moyen en nombre de 200 à 30 000 et contenant, en moyenne statistique, de 0,05 à 1,1 double liaison polymérisable par molécule,

et en transformant le produit de réaction résultant en une dispersion aqueuse, et le composant (II) est une solution ou dispersion aqueuse d'une résine de polyacrylate hydrosoluble ou dispersable dans l'eau ou d'une résine de polyuréthanne ou de polyester hydrosoluble ou dispersable dans l'eau ou d'un mélange de telles solutions ou dispersions aqueuses, la résine de polyacrylate ou la résine de polyuréthanne ou le mélange de telles résines ayant une température de transition vitreuse $T_v$ de +15 à +85°C.

9. Vernis aqueux selon la revendication 8, caractérisé en ce que le composant (I) peut être obtenu en polymérisant, dans un solvant organique ou dans un mélange de solvants organiques,

(a1) de 10 à 90% en poids d'esters aliphatiques ou cycloaliphatiques de l'acide acrylique ou de l'acide méthacrylique ou d'un mélange de tels esters,
(a2) de 0 à 1% en poids d'un monomère éthyléniquement insaturé portant au moins un groupe hydroxyle dans la molécule ou d'un mélange de tels monomères,
(a3) de 0 à 30% en poids d'un monomère éthyléniquement insaturé portant au moins un groupe carboxyle dans la molécule ou d'un mélange de tels monomères et
(a4) de 0 à 7% en poids d'un monomère éthyléniquement insaturé différent de (a1), (a2) et (a3) ou d'un mélange de tels monomères

en présence de 10 à 90% en poids du composant (B) et en transformant le produit de réaction résultant en une dispersion aqueuse.

10. Vernis aqueux selon la revendication 8 ou 9, caractérisé en ce que le composant (B) peut être obtenu en faisant réagir

(b1) un polyester- et/ou polyéther-polyol renfermant éventuellement des doubles liaisons polymérisables, ayant un poids moléculaire moyen en nombre de 400 à 5 000, ou un mélange de tels polyester- et/ou polyéther-polyols,
(b2) un polyisocyanate ou un mélange de polyisocyanates,

(b3) éventuellement un composé renfermant, en plus d'une double liaison polymérisable, au moins encore un groupe réactif vis-à-vis des groupes NCO, ou un mélange de tels composés,
(b4) éventuellement un composé renfermant au moins un groupe réactif vis-à-vis des groupes isocyanate et au moins un groupe capable de former des anions dans la molécule, ou un mélange de tels composés,
(b5) éventuellement un composé renfermant au moins un groupe réactif vis-à-vis des groupes NCO et au moins un groupe polyoxyalkylène dans la molécule, ou un mélange de tels composés, et éventuellement
(b6) un composé organique renfermant des groupes hydroxyle et/ou amino, ayant un poids moléculaire de 60 à 600, ou un mélange de tels composés

pour former une résine de polyuréthanne ayant un poids moléculaire moyen en nombre de 200 à 30 000 et renfermant, en moyenne statistique, de 0,05 à 1,1 double liaison polymérisable par molécule.